# EUROPEAN PATENT SPECIFICATION

(11) **EP 2 624 619 B1**
(45) Date of publication and mention of the grant of the patent: **24.09.2014**
(21) Application number: 12360007.4
(22) Date of filing: 31.01.2012
(51) Int. Cl.: H04W 24/02

(54) **Network configuration**
Netzwerkkonfiguration
Configuration de réseau

(43) Date of publication of application: 07.08.2013
(73) Proprietor: ALCATEL LUCENT, 92100 Boulogne-Billancourt (FR)
(72) Inventor: Brend, Graham, Bathford, Bath BA1 7UE (GB); Sapiano, Philip Charles, Corsham, Wiltshire SN13 9AY (GB); Castellino, Owen, Swindon, Wiltshire SN5 5QY (GB)
(74) Representative: Sarup, David Alexander

(56) References cited:
- EP-A1- 2 312 881
- EP-A1- 2 403 294
- WO-A1-2010/068154
- US-A1- 2010 273 432
- US-A1- 2010 296 401

## Description

### FIELD OF THE INVENTION

The present invention relates to a method of communicating operational configuration information between a remote access network node in a wireless communication network operating according to a first radio access technology protocol and a small cell access node in a wireless communication network operating according to a second radio access technology protocol, a computer program product and a small cell gateway operable to perform that method.

### BACKGROUND

Wireless telecommunications networks are known. In a cellular system, radio coverage is provided by regions of geographical area. Those regions are known as cells. A base station is located in each cell to provide the radio coverage. Traditional base stations provide coverage in relatively large geographical areas and the cells are known as macro cells.

In wireless networks, it is common to find multiple radio access technology protocols or multiple wireless technologies deployed within a particular area. For example, 4G, 3G and 2G (also known as LTE, UMTS and GSM) may be supported by a single network operator, or by different network operators, in a given geographical area. Those wireless technologies need to co-exist within the wireless network. Each wireless technology has different procedures and functionality. However, in many networks such different radio access technology protocols co-exist and it is beneficial to allow mobile equipment (for example, user equipment) to roam from one network to another. That is to say, it may be beneficial for user equipment to use 2, 3 or 4G if they are operable to do so.

In order to ensure that each wireless access technology protocol network can co-exist with minimal impact on the others and can, for example, support seamless handover of user equipment from one protocol to another, it is desirable for the different networks to be able to exchange information about their configurations. The mechanism defined in 3GPP standards for exchanging such operational configuration information is the RAN Information Management procedure (RIM procedure). This is a generic mechanism for transferring application specific data between Radio Access Network (RAN) nodes via a core network. The RIM procedure uses specific messages which are relevant to the respective wireless technology protocols. For example, 4G (LTE) has a number of specific messages defined for the RIM procedure and UMTS has similar messages.

The RIM procedure allows one RAN node (also known as the controlling node) to request information from another RAN node (a serving node). The information requested and exchanged between those nodes is typically operational configuration information about a cell supported by the serving node. That information may be a single one shot report or may be a request for multiple reports in which the serving node autonomously sends a report to the controlling node whenever the configuration of the specific cell in the serving node changes.

In some radio access technology protocol networks it has been recognised that it is possible to provide smaller sized cells within a macro cell. Cells which are smaller than macro cells are sometimes referred to as micro cells, pico cells or femto cells. Generically, such cells are referred to as small cells. The term "small cell" is used throughout this document to refer generally to cells that are smaller than macro cells.

I

One way to establish a small cell (sometimes referred to as a home cell) is to provide a small cell base station (or home base station) that provides coverage having a relatively limited range within the coverage area of a macro cell. The transmission power of a small cell base station is relatively low and, hence, each small cell provides a small coverage area compared to that of a macro cell and covers, for example, an office or home.

Such small cells may be provided where the communication coverage provided by the macro cell is poor, or where a user wishes to use an alternative communications link provided locally by the small cell station to communicate with the core network. Such a situation may arise where, for example, a user has a pre-existing communications link and the user wishes to use that link in preference to that provided by a macro cell to communicate with the core network - for example, a broadband connection may serve the small cell base station.

One type of RAN network node is a small cell base station. Small cells are low power, low cost, network operator or user deployed base stations that are able to provide exceptional cellular coverage in residential or enterprise environments.

Small cell base stations typically have extensive auto configuration and self-optimization abilities, thus enabling simple plug and play deployment. Typically, a small cell base station will be designed to automatically integrate into an existing macro cellular network. It is typical that any one wireless network will contain many thousands of femto cells and such femto cells will co-exist with cells of a much larger coverage area. If the small cells and neighbouring macro cells support different wireless technologies (that is to say, they operate according to different protocols), it could be useful for them to exchange information between themselves. There is no restriction on the type of RAN node that can be involved in RIM procedures and, thus, a small cell can act as a controlling node and request information from other remote RAN nodes or, alternatively, remote RAN nodes can request information from a small cell, in which case the small cell will act as a serving node.

One macro cell may contain or neighbour a significant number of small cells. Each small cell can, in theory, request RIM application information or configuration information from the same macro cell or from a number of macro cells and thus the existence of small cells within a macro cell network can result in significant network traffic being generated by RIM procedures between small cells and other RAN nodes. Such network traffic is undesirable since network traffic impacts the operation of all RAN nodes and the core network.

US2010/0296401 describes a communication system including a hybrid network controller. The hybrid network controller may determine and/or communicate configuration parameters corresponding to space, time, frequency and/or code domains that may enable communication of data between and/or among two or more entities within the communication system. The network controller may assign femto cells, access points and/or end point devices to handle communication of data.

EP 2 403 294 describes a method, device and system for acquiring load information in a communications network. According to one described embodiment, a source access controller and a target access controller interact through Radio Access Network (RAN) Information Management (RIM) based load information request and response messages so that a source radio access technology system can acquire load information of a target radio access technology system before an inter-radio access technology packet switched domain handover is performed. Such techniques enable load balancing between-different-radio access technology systems.

Accordingly, it is desired to provide an improved technique to enable configuration information to be provided to small cells more effectively.

### SUMMARY

A first aspect provides a method of communicating operational configuration information between a target remote access network node in a wireless communication network operating according to a first radio access technology protocol and a small cell access node in a wireless communication network operating according to a second radio access technology protocol, the method comprising:
receiving, at said small cell gateway, a request from a requesting small cell access network node in a wireless communication network operating according to a second radio access technology protocol, for operational configuration information from said target remote access network node; and on receipt of said request from said requesting small cell access network node, determining at a small cell gateway whether said operational configuration information from said target remote access network node is already stored and, if so, transmitting said stored information; and, if not already stored,
obtaining, at said small cell gateway, operational configuration information from said target remote access network node in the wireless communication network operating according to the first radio access technology protocol;
storing, at said small cell gateway, the target remote access network node operational configuration information; and
transmitting, by said small cell gateway, the stored target remote access network node operational configuration information to a requesting small cell access network node in a wireless communication network operating according to a second radio access technology protocol.

In any one wireless network run by a network operator, or multiple network operators, it is common to find multiple radio access technology protocols or multiple wireless technologies deployed within a particular area. For example, 4G, 3G and 2G (also known as LTE, UMTS and GSM) may be supported by a network operator or operators in a given geographical area. Those wireless technologies need to co-exist within the wireless network. Each wireless technology has different procedures and functionality. However, in many networks such different radio access technology protocols co-exist and it is beneficial to allow mobile equipment (for example, user equipment) to roam from one network to another. That is to say, it may be beneficial for user equipment to use 2, 3 or 4G if they are operable to do so.

In order to ensure that each wireless access technology protocol network can co-exist with minimal impact on the others and can, for example, support seamless handover of user equipment from one protocol to another, it is desirable for the different networks to be able to exchange information about their configurations. The mechanism defined in 3GPP standards for exchanging such operational configuration information is the RAN Information Management procedure (RIM procedure). This is a generic mechanism for transferring application specific data between Radio Access Network (RAN) nodes via a core network. The RIM procedure uses specific messages which are relevant to the respective wireless technology protocols. For example, 4G (LTE) has a number of specific messages defined for the RIM procedure and UMTS has similar messages.

The RIM procedure allows one RAN node (also known as the controlling node) to request information from another RAN node (a serving node). The information requested and exchanged between those nodes is typically operational configuration information about a cell supported by the serving node. That information may be a single one shot report or may be a request for multiple reports in which the serving node autonomously sends a report to the controlling node whenever the configuration of the specific cell in the serving node changes.

In some radio access technology protocol networks it has been recognised that it is possible to provide smaller sized cells within a macro cell. Cells which are smaller than macro cells are sometimes referred to as micro cells, pico cells or femto cells. Generically, such cells are referred to as small cells. The term "small cell" is used throughout this document to refer generally to cells that are smaller than macro cells.

Small cell base stations typically have extensive auto configuration and self-optimization abilities, thus enabling simple plug and play deployment. Typically, a small cell base station will be designed to automatically integrate into an existing macro cellular network. It is typical that any one wireless network will contain many thousands of femto cells and such femto cells will co-exist with cells of a much larger coverage area. If the small cells and neighbouring macro cells support different wireless technologies (that is to say, they operate according to different protocols), it could be useful for them to exchange information between themselves. There is no restriction on the type of RAN mode that can be involved in RIM procedures and, thus, a small cell can act as a controlling node and request information from other remote RAN nodes or, alternatively, remote RAN nodes can request information from a small cell, in which case the small cell will act as a serving node.

One macro cell may contain or neighbour a significant number of small cells. Each small cell can, in theory, request RIM application information or configuration information from the same macro cell or from a number of macro cells and thus the existence of small cells within a macro cell network can result in significant network traffic being generated by RIM procedures between small cells and other RAN nodes. Such network traffic is undesirable since network traffic impacts the operation of all RAN nodes and the core network.

A direct implementation of existing RIM procedures allows each small cell (for example, a femto cell) acting as a controlling node, to initiate a request for information about a specific cell from a RAN node and each request is treated independently. It is likely that each femto cell would be requesting the same information from a given RAN node, leading to multiple requests and responses which would contain the same information. Such an arrangement leads to the potential for significant network traffic which impacts both controlling and serving nodes and the core network. That traffic is unnecessary and wasteful.

The first aspect recognises that a small cell gateway may act as a signalling concentrator. The method implemented at a small cell gateway may operate to limit the number of messages containing operational configuration information between nodes, for example, RIM messages, those messages containing configuration information which needs to be sent within a small cell network to any remote RAN node to receive information from that RAN node.

According to the first aspect, whenever the small cell gateway receives a message from a small cell (a controlling node) including a request for operational configuration information from a remote access node (a serving node), the small cell gateway is operable to determine whether it has already obtained and cached a copy of that required configuration information or application information. If a small cell gateway already has a copy of the information, it returns that information to the requesting small cell without sending a request for the information to the remote network access node.

The method further comprises: receiving a request from the requesting small cell access network node in a wireless communication network operating according to a second radio access technology protocol for operational configuration information from a target remote access network node in the wireless communication network operating according to the first radio access technology protocol. Accordingly, if the small cell gateway does not have a cached copy of the required information it is operable to create an association to the target remote access node. That is to say, the small cell gateway acts as a controlling node instead of the originating small cell. In effect, the small cell gateway is operable, according to some embodiments, to cancel a request initiated by the originating small cell and creates its own. That is to say, the small cell gateway acts as a controlling node. The small cell gateway may, according to some embodiments, be operable to set such information requests to "multiple reports", thereby ensuring that the remote RAN node autonomously sends configuration information to the small cell gateway, should the configuration of the target node change. As a result, the small cell gateway effectively establishes an association between itself and the remote RAN node, rather than supporting an association from each small cell within its control to the remote RAN node.

On receipt of the request from the requesting small cell access network node in a wireless communication network operating according to a second radio access technology protocol for operational configuration information from a target remote access network node in the wireless communication network operating according to the first radio access technology protocol, determining whether the operational configuration information from the target remote access network node is already stored, and, if so, transmitting the stored information. Accordingly, no new association is created unnecessarily and if the information is already held at the gateway there is no need to specifically request information from the remote node again, thus minimising network signalling.

According to one embodiment, the method further comprises: obtaining updated operational configuration information from a target remote access network node in the wireless communication network operating according to the first radio access technology protocol; and storing the updated target access network node operational configuration information. Accordingly, if the small cell gateway has established an association which allows for multiple updates, or updates whenever the configuration information of interest is updated, that information can be available to small cells connected to the small cell gateway irrespective of whether the requesting small cell or cells requested a single or multiple report. Such an arrangement also ensures that the small cell gateway has up to date configuration in respect of the target node and minimises unnecessary network signalling.

According to one embodiment the method, further comprises: initiating transmission of the stored updated target access network node operational configuration information to one or more requesting small cell access network nodes in a wireless communication network operating according to a second radio access technology protocol. Accordingly, if a small cell gateway has received updated information, it can be operable to forward that information to small cells that requested multiple reports.

According to one embodiment, obtaining comprises transmitting a request for the operational configuration information to the target remote access network node and awaiting receipt of a response. In cases where the information is not already available at the small cell gateway, network signalling to the target node in the other network is required.

According to one embodiment the method further comprises: terminating a request from the requesting small cell access network node for operational configuration information from the remote access network node in a wireless communication network operating according to a first radio access technology protocol;
noting that the requesting small cell access node has requested operational information from the remote access network node; and
creating a new request for operational configuration information from the remote access node. If no association has been made between a small cell gateway and a target node, creation of an association, whilst noting the small cell from which the information request was made, allows the small cell gateway to operate as a signalling concentrator. By noting all requests from small cells under the control of the small cell gateway, and the type of those requests (single or multiple), the gateway can create a look up table so that its own association with the target node may be reused by all small cells interested in information from the target cell.

According to one embodiment the method further comprises: encoding the stored target access network information to appear to originate from the target remote access network node prior to transmission to the requesting small cell access node. Accordingly, the gateway can "spoof" its signalling so that messages appear to originate and propagate through the network to the small cell in accordance with known procedures. Such an approach minimises changes which may be necessary at a small cell.

According to one embodiment, the request from the requesting small cell access network node comprises an indication of whether operational configuration from the remote access network is required once, or each time relevant operational configuration parameters of interest are changed. Accordingly the request may include an indication of whether a single or multiple report is required by the small cell.

According to one embodiment, the request from the requesting small cell access network node comprises a RIM information request. According to one embodiment, the first and second radio access technology protocols comprise 3GPP radio access technology protocols.

A second aspect provides a computer program product operable, when executed on a computer, to perform the method of the first aspect.

A third aspect provides a small cell gateway operable to communicate operational configuration information between a target remote access network node in a wireless communication network operating according to a first radio access technology protocol and a small cell access node in a wireless communication network operating according to a second radio access technology protocol, the small cell gateway comprising:
reception logic operable to receive a request from a requesting small cell access network node in a wireless communication network operating according to a second radio access technology protocol for operational configuration information from a target remote access network node;
operational configuration storage logic operable to determine whether the operational configuration information from the target remote access network node is already stored, and, if so, to instruct the transmission logic to transmit the stored information on receipt of the request from the small cell access network, and if not already stored, said operational configuration determination logic is operable to obtain operational configuration information from a target remote access network node in the wireless communication network operating according to the first radio access technology protocol; and said
operational configuration storage logic is further operable to store the target remote access network node operational configuration information; and
transmission logic operable to transmit the stored target remote access network node operational configuration information to a requesting small cell access network node in a wireless communication network operating according to a second radio access technology protocol.

The gateway further comprises: reception logic operable to receive a request from the requesting small cell access network node in a wireless communication network operating according to a second radio access technology protocol for operational configuration information from a target remote access network node in the wireless communication network operating according to the first radio access technology protocol.

In one embodiment, the gateway further comprises: update information logic operable to obtain updated operational configuration information from a target remote access network node in the wireless communication network operating according to the first radio access technology protocol; and store the updated target access network node operational configuration information.

In one embodiment, the gateway further comprises: initiation logic operable to initiate transmission of the stored updated target access network node operational configuration information to one or more requesting small cell access network nodes in a wireless communication network operating according to a second radio access technology protocol.

On receipt of the request from the requesting small cell access network node in a wireless communication network operating according to a second radio access technology protocol for operational configuration information from a target remote access network node in the wireless communication network operating according to said first radio access technology protocol, the operational configuration storage logic is further operable to determine whether the operational configuration information from the target remote access network node is already stored, and, if so, to instruct the transmission logic to transmit the stored information.

In one embodiment, the operational configuration determination logic is operable to transmit a request for operational configuration information to the target remote access network node and await receipt of a response.

In one embodiment, the operational configuration determination logic is operable to terminate a request from the requesting small cell access network node for operational configuration information from the remote access network node in a wireless communication network operating according to a first radio access technology protocol; note that the requesting small cell access node has requested operational information from said remote access network node; and create a new request for operational configuration information from said remote access node.

In one embodiment, the transmission logic is operable to encode the stored target access network information to appear to originate from the target remote access network node prior to transmission to the requesting small cell access node.

In one embodiment, the request from the requesting small cell access network node comprises an indication of whether operational configuration from the remote access network is required once, or each time relevant operational configuration parameters of interest are changed.

In one embodiment, the request from the requesting small cell access network node comprises a RIM information request.

In one embodiment, the first and second radio access technology protocols comprise 3GPP radio access technology protocols.

Further particular and preferred embodiments are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments are now described further, with reference to the accompanying drawings, in which:
Figure 1 illustrates the main components of a telecommunications network according to one embodiment;
Figure 2 illustrates a general deployment within one macro cell shown in Figure 1;
Figure 3 illustrates schematically the main processing steps according to one embodiment;
Figure 4 is a signalling diagram illustrating schematically signalling between nodes according to one embodiment;
Figure 5 is a signalling diagram illustrating schematically signalling between network nodes according to one embodiment; and
Figure 6 is a signalling diagram illustrating schematically signalling between network nodes according to one embodiment.

### DESCRIPTION OF THE EMBODIMENTS

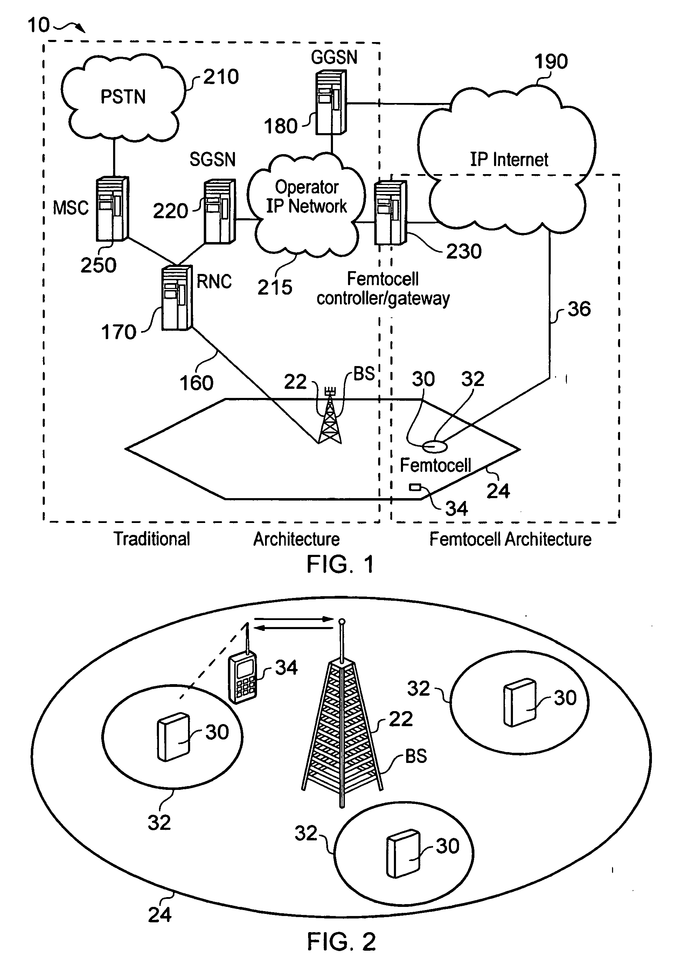

Figure 1 illustrates a wireless communication network, generally 10, according to one embodiment. User equipment 34 roam through the wireless communication network 10. Base stations 22 are provided which support respective macro cells 24. A number of such base stations are provided, which are distributed geographically in order to provide a wide area of coverage to the user equipment 34. When user equipment 34 is within a macro cell 24 supported by the base station 22 then communications may be established between the user equipment 34 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. It will be appreciated that Figure 1 illustrates a small subset of the total number of user equipment and base stations that may be present in a typical communications system.

The operation of a cluster of base stations is managed by a radio network controller 170. The radio network controller 170 controls the operation of the wireless communications network 10 by communicating with the base stations 22 over a backhaul communications link 160. The network controller 170 also communicates with the user equipment 34 via their respective radio links in order to efficiently manage the wireless communication network 10.

The radio network controller 170 maintains a neighbour list which includes information about the geographical relationship between cells supported by base stations. In addition, the radio network controller 170 maintains location information which provides information on the location of the user equipment within the wireless communications network 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates via an operator IP network 215 with serving general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided a number of femto cell base stations 30 (sometimes referred to as home base stations), each of which provides a femto cell 32 (or home cell) in the vicinity of a building within which the associated femto cell base station is installed. The femto cells 32 provide local communications coverage for a user in the vicinity of those buildings. Each femto cell base station 30 communicates with the network 10 via a femto cell controller/gateway 230. A handover or camping event is initiated between the base station 22 and the femto cell base stations 30 when the user equipment 34 provides a measurement report to the macro base station 22 which indicates that a femto base station 30 is within range. The femto cell base stations 30 typically utilise the user's broadband Internet connection 36 (such as ADSL, Cable, Ethernet, etc.) as a backhaul.

Femto cell base stations 30 are lower-power, low-cost, network operator or user-deployed base stations that provide a high cellular quality of service in residential or enterprise environment. In contrast to current macro cell approaches where complex and highly reliable base stations are deployed to strategic locations decided by the network owner, the femto cell base stations 30 are provided locally by customers. Such femto cell base stations 30 provide local coverage in areas of the macro network where quality of service may be low. Hence, the femto cell base stations 30 provide for improved quality of service in areas which are difficult for network operators. To reduce the cost of the femto base stations 30 and to reduce complexity and interference effects of the femto cell 32 on other user equipment within the macro cell, the transmission power of the femto cell base station 30 is relatively low in order to restrict the size of the femto cell 32 to a range of tens of metres or less. The femto cell base stations 30 have extensive auto-configuration and self-optimisation capability to enable a simple plug-and-play deployment. As such, they are designed to automatically integrate themselves into an existing macro cellular wireless network 10. Some access points within the macro cellular network may contain some functionality traditionally provided by the core network.

Each femto base station 30 will typically have functionality to control which user equipment 34 may access to that femto base station 30. A closed access femto base station will only allow access to those user equipment who have been indicated (for example using the user equipment's International Mobile Subscriber Identity (IMSI)) as being registered with that femto base station, whereas an open access femto base station allows access to all user equipment.

In wireless networks, it is common to find multiple radio access technology protocols or multiple wireless technologies deployed within a particular area. For example, 4G, 3G and 2G (also known as LTE, UMTS and GSM) may be supported by a single network operator, or by different network operators, in a given geographical area. Those wireless technologies need to co-exist within the wireless network. Each wireless technology has different procedures and functionality. However, in many networks such different radio access technology protocols co-exist and it is beneficial to allow mobile equipment (for example, user equipment) to roam from one network to another. That is to say, it may be beneficial for user equipment to use 2, 3 or 4G if they are operable to do so.

In order to ensure that each wireless access technology protocol network can co-exist with minimal impact on the others and can, for example, support seamless handover of user equipment from one protocol to another, it is desirable for the different networks to be able to exchange information about their configurations. The mechanism defined in 3GPP standards for exchanging such operational configuration information is the RAN Information Management procedure (RIM procedure). This is a generic mechanism for transferring application specific data between Radio Access Network (RAN) nodes via a core network. The RIM procedure uses specific messages which are relevant to the respective wireless technology protocols. For example, 4G (LTE) has a number of specific messages defined for the RIM procedure and UMTS has similar messages.

The RIM procedure allows one RAN node (also known as the controlling node) to request information from another RAN node (a serving node). The information requested and exchanged between those nodes is typically operational configuration information about a cell supported by the serving node. That information may be a single, one shot, report or may be a request for multiple reports in which the serving node autonomously sends a report to the controlling node whenever the configuration of the specific cell in the serving node changes.

In some radio access technology protocol networks it has been recognised that it is possible to provide smaller sized cells within a macro cell. Cells which are smaller than macro cells are sometimes referred to as micro cells, pico cells or femto cells. Generically, such cells are referred to as small cells. The term "small cell" is used throughout this document to refer generally to cells that are smaller than macro cells.

One way to establish a small cell (sometimes referred to as a home cell) is to provide a small cell base station (or home base station) that provides coverage having a relatively limited range within the coverage area of a macro cell. The transmission power of a small cell base station is relatively low and, hence, each small cell provides a small coverage area compared to that of a macro cell and covers, for example, an office or home.

Such small cells may be provided where the communication coverage provided by the macro cell is poor, or where a user wishes to use an alternative communications link provided locally by the small cell station to communicate with the core network. Such a situation may arise where, for example, a user has a pre-existing communications link and the user wishes to use that link in preference to that provided by a macro cell to communicate with the core network - for example, a broadband connection may serve the small cell base station.

One type of RAN network node is a small cell base station. Small cells are low power, low cost, user deployed base stations that are able to provide exceptional cellular coverage in residential or enterprise environments.

Small cell base stations typically have extensive auto configuration and self-optimization abilities, thus enabling simple plug and play deployment. Typically, a small cell base station will be designed to automatically integrate into an existing macro cellular network. It is typical that any one wireless network will contain many thousands of femto cells and such femto cells will co-exist with cells of a much larger coverage area. If the small cells and neighbouring macro cells support different wireless technologies (that is to say, they operate according to different protocols), it could be useful for them to exchange information between themselves. There is no restriction on the type of RAN mode that can be involved in RIM procedures and, thus, a small cell can act as a controlling node and request information from other remote RAN nodes or, alternatively, remote RAN nodes can request information from a small cell, in which case the small cell will act as a serving node.

One macro cell may contain or neighbour a significant number of small cells. Each small cell can, in theory, request RIM application information or configuration information from the same macro cell or from a number of macro cells and thus the existence of small cells within a macro cell network can result in significant network traffic being generated by RIM procedures between small cells and other RAN nodes. Such network traffic is undesirable since network traffic impacts the operation of all RAN nodes and the core network.

A direct implementation of existing RIM procedures allows each small cell (for example, a femto cell) acting as a controlling node, to initiate a request for information about a specific cell from a RAN node and each request is treated independently. It is likely that each femto cell would be requesting the same information from a given RAN node, leading to multiple requests and responses which would contain the same information. Such an arrangement leads to the potential for significant network traffic which impacts both controlling and serving nodes and the core network. That traffic is unnecessary and wasteful.

Such drawbacks are further exacerbated if the controlling small cell base stations (for example, a femto base station) indicate that they require multiple reports from the serving nodes. In such an arrangement, the serving node sends updated information to all controlling nodes whenever the configuration of the identified cell on the serving node changes. Thus, if a number of femto cells request multiple reports from the same node, that node will have to send the message to each femto cell which had requested the multiple reports whenever the configuration of the cell on that node changes. The information contained in each message is the same, which again adds unnecessary and wasteful traffic to a network.

Before describing the embodiments in any more detail, a brief overview will now be provided. Aspects and embodiments introduce a method of operation of a small cell gateway, for example, femtocell gateway. The method implemented at a gateway may operate to limit the number of RIM messages containing configuration information which needs to be sent within a small cell network to any remote RAN node to receive information from that RAN node.

According to aspects, whenever the small cell gateway receives a message from a small cell (a controlling node) including a request for RIM information from a remote RAN node (a serving node), the small cell gateway is operable to determine whether it has already obtained and cached a copy of that required RIM configuration information or application information. If a small cell gateway already has a copy of the RIM application information, it returns that information to the requesting small cell without sending a request for the information to the remote RAN node.

If the small cell gateway does not have a cached copy of the required information it is operable to create a new RIM association to the remote RAN node. That is to say, the small cell gateway acts as a controlling node instead of the originating small cell. In effect, the small cell gateway cancels the RIM association initiated by the originating small cell and creates its own. That is to say, the small cell gateway acts as a controlling node. The small cell gateway may, according to some embodiments, be operable to set such a RIM information request to "multiple reports", thereby ensuring that the remote RAN node autonomously sends RIM information to the small cell gateway, should the configuration of the target node change. As a result, the small cell gateway effectively establishes a RIM association between itself and the remote RAN node, rather than supporting a RIM association from each femto cell within its control to the remote RAN node.

According to some embodiments, if the small cell has indicated to the gateway in its original RIM request that it wishes to receive multiple reports or RIM information updates from the remote RAN node, the small cell gateway stores that information and associates it with the originating small cell. Thus, whenever the remote RAN node sends new RIM information to the small cell gateway, the gateway is operable to forward that information to any small cells that had previously requested multiple reports from that particular remote RAN node.

According to some embodiments, the small cell gateway is operable to override any cached copy of RIM information from a remote RAN node whenever it receives that new information from that RAN node.

Thus, aspects allow the small cell gateway to effectively manage RIM information requests and reports on behalf of any small cell which it supports. The small cell gateway acts as a pseudo RIM controlling node, thereby significantly reducing the amount of network traffic that may be required should the small cell gateway not implement such a method on behalf of small cells under its control.

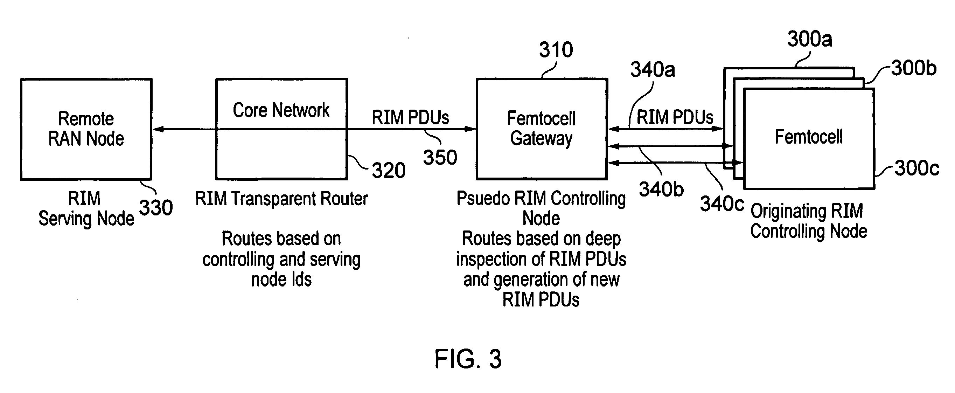

Figure 3 illustrates schematically the main processing steps according to one embodiment. In general, methods according to aspects described herein allow small cells, in this case femto cells 300a, 300b, 300c, to communicate or obtain operational configuration information via standard RIM procedures from a remote RAN node 330. That remote RAN node 330 is operating according to a different wireless communication protocol to femto cells 300a, 300b, 300c and thus those femto cells may require information from the remote RAN node 330 in order to improve their operational efficiency.

If a femto cell 300a requires information from a remote RAN node 330 it initiates a RIM PDU 340a and transmits that RIM PDU through femto gateway 310. According to aspects described herein, femto gateway 310 is operable to decode that RIM PDU and terminate it. The femto gateway 310 then initiates its own RIM PDU in relation to that particular serving node and sets a flag indicating that femto cell 300a requires information from that remote RAN node 330. The RIM PDU 350 sent by femto gateway 310 passes through core network 320 to the remote RAN node. The remote RAN node 330, which is in this case the RIM serving node, is operable to send its response back to femto gateway 310. The femto cell gateway then keeps a record of information received from that remote RAN node 330 and also has a look-up table relating to femto cells 300a, 300b and 300c, and knows which of those femto cells is interested in receiving information from remote RAN node 330. It can thus be seen that if all three femto cells 300a, 300b and 300c send a RIM PDU to a remote RAN node 330, those RIM PDUs being indicated as messaging 340a, 340b and 340c in Figure 3, rather than send three lots of signalling through the core network 320 the femto gateway terminates the RIM PDUs from each of the individual femto cells and replaces it with a single RIM PDU 350 to the RAN node.

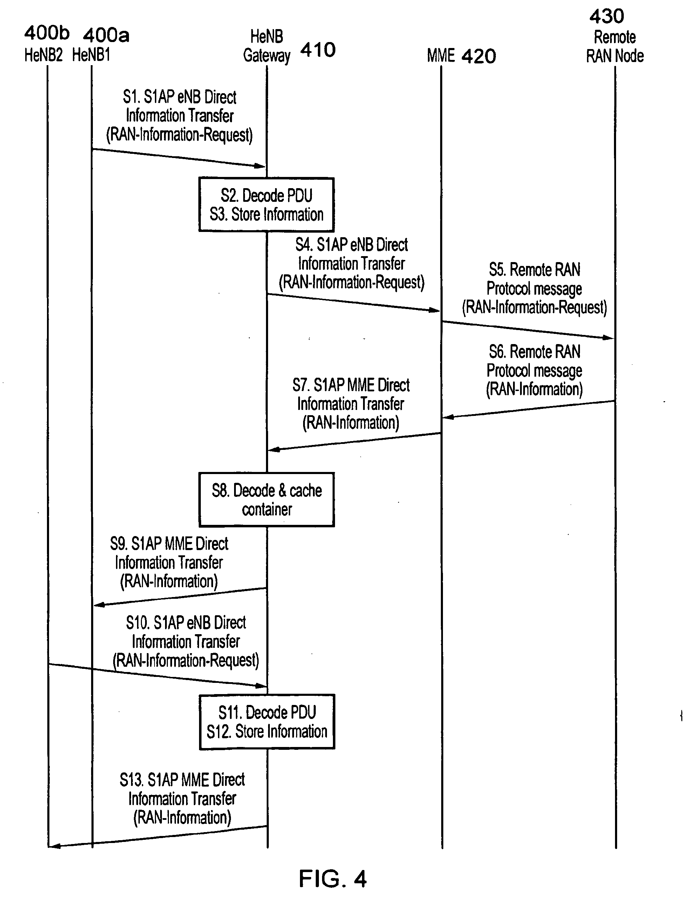

Figure 4 is a signalling diagram illustrating schematically signalling between nodes according to one embodiment. In the example illustrated in Figure 4, an LTE femto cell (HeNB) is connected to an LTE femto cell gateway (HeNB-GW) and wishes to communicate with a remote RAN node in a network operating according to a different radio telecommunications protocol; for example, a UMTS network or similar.

In the illustrated example, an HeNB 400a acts as a controlling node and initiates a request for RIM information about a specific cell supported by a remote RAN node 430 which is the serving node in this RIM procedure.

In the illustrated case, this is the first request that an HeNB-GW 410 has received for information about that cell being supported by specific RAN node 430. On reception of a RIM request the HeNB-GW creates a new RIM association between itself 410 and the remote RAN node 430 to request information from that node 430. When the information is returned via mobility management entity 420 in the core network the HeNB-GW 410 decodes the RIM container, caches the information and stores it before creating and sending a new RIM PDU to the originating HeNB 400a.

That procedure may occur according to the following steps. At step S1 the HeNB 1 400a sends an S1AP eNB Direct Information Transfer message to the HeNB-GW 410. At step S2, the small cell gateway decodes the RIM container sent in the message from small cell 400a and determines the RIM PDU type (protocol data unit type). At step S3 in the illustrated example, the RIM PDU is a RAN information request, so the small cell gateway 410 stores the RIM application ID, the small cell ID (also known as the controlling node ID which identifies the requesting small cell 400a) and the destination node ID (also known as the serving node ID) and in this case relates to remote RAN node 430. That information, including reporting cell identity at serving node, is stored in an internal table at the small cell gateway 410. The internal look-up table stored at HeNB gateway or small cell gateway 410 may be known, for example, as a RIM context table and may, according to some embodiments, list the following RIM context information:
a) Destination Node ID - remote RAN Node;
b) Reporting Cell ID;
c) RIM Application Type;
d) RAN-INFORMATION PDU information - that is to say, the information returned from the remote RAN; and
e) A list of interested small cell IDs along with their request types (be it single or multiple).

At step S4, the small cell gateway 410 creates a new RAN information request PDU and it includes its own identity as that of the controlling node. That new PDU is sent in an S1AP eNB direct information transfer to a mobility management entity 420 in the core network. The MME routes the new message to the remote RAN node 430. That step S5 can involve signalling between different core network nodes, which ultimately leads to the RAN information request PDU being sent to the required RAN node 430 using application protocols relevant to that network.

At step S6 the remote RAN node 430 returns the required information to the core network which is then forwarded to the mobility management entity 420.

At step S7 the MME forwards the RAN information PDU in an S1AP MME direct information transfer message to the small cell gateway 410. The small cell gateway decodes at step S8 the S1AP message and, after determining that the RIM PDU type is RAN information, the small cell gateway 410 decodes and caches that RIM application container.

At step S9 the small cell gateway creates a new RAN information PDU including setting the reporting cell ID and small cell ID appropriately to match that expected by the originating small cell 400a and sends that newly created PDU in an S1AP MME direct information transfer message to the originating small cell 400a.

Figure 4 also illustrates steps which may occur at a later point. At step S10, a different small cell base station HeNB2 or 400b sends an S1AP eNB direct information transfer message to the small cell gateway for the same RIM application ID and destination cell ID as that requested by the small cell base station 400a in step 1. When the small cell gateway 410 decodes the RIM container sent in the S1AP message at step S11 in Figure 4, it determines the RIM PDU type. The gateway 410 goes on to determine that there is a match of RIM application ID and reporting cell ID to an existing entry in the RIM context table. The small cell gateway is then operable to update the RIM context entry and adds the small cell ID of small cell 2 or 400b.

At step S13, the small cell gateway retrieves the stored RAN information PDU information and creates a new RAN information PDU including setting the reporting cell ID and small cell ID appropriately to match that expected by small cell 400b. The gateway 410 then sends the newly created PDU in an S1AP MME direct transfer information message to the originating small cell, in this case 400b. As can be seen in the signalling diagram of Figure 4, there is no requirement for the gateway to explicitly communicate through the core network including MME 420 to remote RAN node 430, because that information is already held at small cell gateway 410. It will thus be understood that signalling within the networks is reduced.

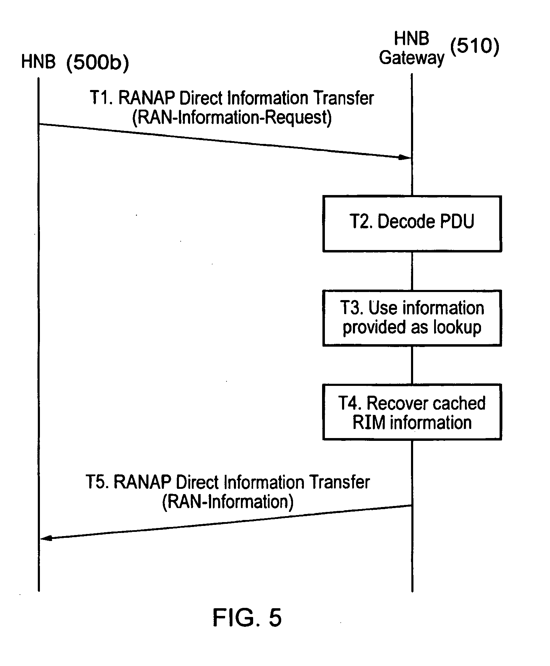

Figure 5 is a signalling diagram illustrating schematically signalling between network nodes according to one embodiment. In the example of Figure 5, a UMTS femto cell (HNB) 500b is connected to a UMTS femto cell gateway (HNB-GW) 510. In this illustrated example, the controlling node 500b initiates a request for RIM information from a remote RAN node (the serving node). That remote RAN node is not shown in Figure 5. Since it is not the first request that the femto gateway 510 has received for information from that RAN node, the gateway already has RIM application information about the remote RAN node of interest cached. As a result, the femto gateway 510 is operable to send that information to the base station 500b without having to request it from the remote RAN node itself.

In the scenario illustrated schematically in Figure 5, the following steps occur:
At step T1 the small cell, in this case a home femto base station 500b, sends a RANAP direct information transfer message to the UMTS femto gateway 510.
At step T2, the femto gateway 510 decodes the RIM container sent in the RANAP message and determines the RIM PDU type.
At step T3 in this example, the RIM PDU is a RAN information request and the femto gateway 510 uses the RIM application ID, the small cell ID (also known as the controlling node ID), serving node ID and reporting cell ID as a look-up within an internal table.
At step T4, the femto gateway 510 determines from the look-up table that it already has RIM application information from the serving node of interest cached.
At step T5, the femto gateway is operable to create its own RAN information PDU containing the cached RIM information which it then includes in a RANAP direct information transfer message which it is operable to send to the originating small cell, in this case femto base station 500b.

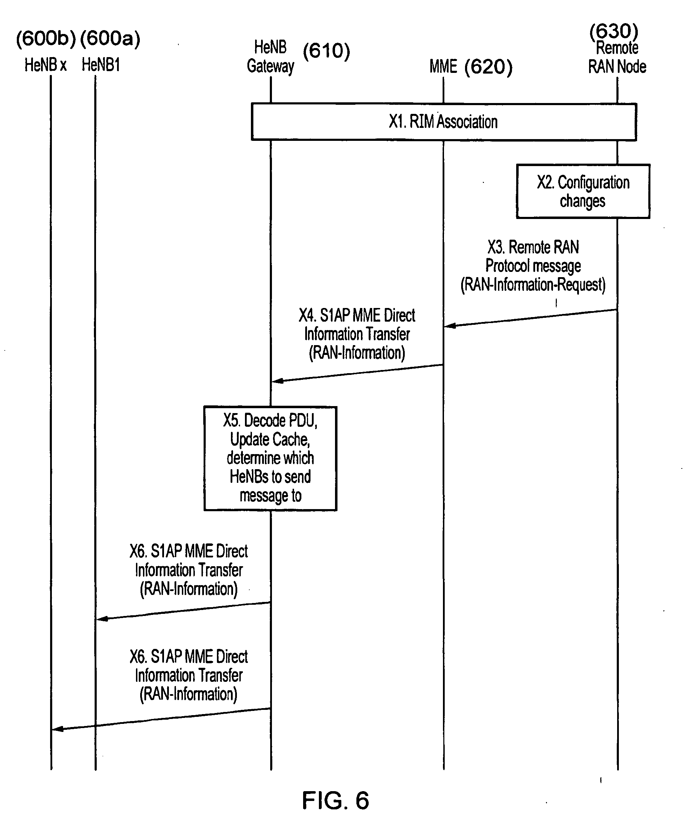

Figure 6 is a signalling diagram illustrating schematically signalling between network nodes according to one embodiment.

Figure 6 illustrates a scenario in which an LTE femto gateway (HeNB-GW) 610 autonomously receives updated RIM information from a remote RAN node 630. In the illustrated example, the small cell gateway 610, which acts as a pseudo controlling node, has previously requested RIM information from the remote RAN node 630 (the serving node). As part of that prior request, the small cell gateway 610 indicated that it wished to receive multiple reports from that remote RAN node 630. As a result, the remote RAN node 630 is operable to send updated RIM information whenever its operational configuration changes.

In the method illustrated schematically in Figure 6, the following steps occur:
At step X1, the small cell gateway 610 had previously established a RIM association between itself and remote RAN node 630. As part of that establishment, the small cell gateway 610 indicated to remote RAN node 630 that it should send updated RIM information on any configuration change.
At step X2, the configuration of the remote node 630 changes.
At step X3, the remote RAN node 630 is operable to send information through its core network which is then forwarded to a mobility management entity 620 in the same network operating according to the same protocols as the small cell gateway 610.
At step X4, the MME 620 is operable to forward the received RAN information PDU in an S1AP MME direct information transfer message to the small cell gateway 610.
At step X5, that small cell gateway 610 decodes the S1AP message, updates its cached RIM application information for the specific remote RAN node 630 and determines which small cells 600a, 600b had previously requested multiple reports from the remote RAN node 630.
At step X6, the small cell gateway creates a new RAN information PDU and sends that newly created PDU in an S1AP MME direct information transfer message to each of the identified small cells 600a, 600b, ensuring that the reporting cell ID and originating cell ID have been set appropriately to match that expected by each of the small cells.

It will be understood that aspects of this invention allow implementation of a method which may operate to reduce network traffic when small cells such as femto cells request RIM information from other RAN nodes. As a result, the processing load on the RAN node and core network is typically reduced. Without a method according to the current solution, each small cell must request RIM information separately and if that request is sent to the same remote RAN node then the RAN node receives multiple requests for the same information which leads to significant and unnecessary network traffic which impacts upon both controlling and serving RANs and the core network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method of communicating operational configuration information between a target remote access network node (330; 430; 630) in a wireless communication network operating according to a first radio access technology protocol and a small cell access node (300; 400a, 400b; 600a, 600b) in a wireless communication network operating according to a second radio access technology protocol, said method comprising:
receiving, at a small cell gateway, a request from a requesting small cell access network node (300; 400a, 400b; 600a, 600b) in a wireless communication network operating according to a second radio access technology protocol for operational configuration information from said target remote access network node; and on receipt of said request from said requesting small cell access network node (300; 400a, 400b; 600a, 600b), determining at said small cell gateway, whether said operational configuration information from said target remote access network node (330; 430; 630) is already stored, and, if so, transmitting said stored information; and, if not already stored,
obtaining, at said small cell gateway (310; 410; 610) operational configuration information from said target remote access network node (330; 430; 630) in said wireless communication network operating according to said first radio access technology protocol;
storing, at said small cell gateway (310; 410; 610), said target remote access network node (330; 430; 630) operational configuration information; and
transmitting, by said small cell gateway, said stored target remote access network node operational configuration information to a requesting small cell access network node (300; 400a, 400b; 600a, 600b) in a wireless communication network operating according to a second radio access technology protocol.

2. A method according to claim 1, further comprising:
obtaining updated operational configuration information from said target remote access network node (330; 430; 630) in said wireless communication network operating according to said first radio access technology protocol; and
storing said updated target remote access network node (330; 430; 630) operational configuration information.

3. A method according to claim 2, comprising: initiating transmission of said stored updated target access network node operational configuration information to one or more requesting small cell access network nodes (300; 400a, 400b; 600a, 600b) in a wireless communication network operating according to a second radio access technology protocol.

4. A method according to any preceding claim, wherein said obtaining comprises transmitting a request for said operational configuration information to said target remote access network node (330; 430; 630) and awaiting receipt of a response.

5. A method according to any preceding claim, further comprising terminating a request from said requesting small cell access network node for operational configuration information from said target remote access network node (330; 430; 630) in a wireless communication network operating according to a first radio access technology protocol;
noting that said requesting small cell access node (300; 400a, 400b; 600a, 600b) has requested operational information from said target remote access network node; and creating a new request for operational configuration information from said target remote access node (330; 430; 630).

6. A method according to any preceding claim, comprising encoding said stored target access network information to appear to originate from said target remote access network node prior to transmission to said requesting small cell access node (300; 400a, 400b; 600a, 600b).

7. A method according to any preceding claim, wherein said request from said requesting small cell access network node comprises an indication of whether operational configuration from said target remote access network node (330; 430; 630) is required once, or each time relevant operational configuration parameters of interest are changed.

8. A method according to any preceding claim, wherein said request from said requesting small cell access network node (300; 400a, 400b; 600a, 600b) comprises a RIM information request.

9. A method according to any preceding claim, wherein the first and second radio access technology protocols comprise 3GPP radio access technology protocols.

10. A computer program product operable, when executed on a computer, to perform the method of any one of claims 1 to 9.

11. A small cell gateway (310; 410; 610) operable to communicate operational configuration information between a target remote access network node (330; 430; 630) in a wireless communication network operating according to a first radio access technology protocol and a small cell access node (300; 400a, 400b; 600a, 600b) in a wireless communication network operating according to a second radio access technology protocol, said small cell gateway (310; 410; 610) comprising:
reception logic operable to receive a request from the requesting small cell access network node in a wireless communication network operating according to a second radio access technology protocol for operational configuration information from a target remote access network node; operational configuration storage logic operable to determine whether the operational configuration information from the target remote access network node is already stored, and, if so, to instruct the transmission logic to transmit the stored information on receipt of the request from the small cell access network, and, if not already stored, said
operational configuration determination logic is operable to obtain operational configuration information from a target remote access network node (330; 430; 630) in said wireless communication network operating according to said first radio access technology protocol; and said
operational configuration storage logic is further operable to store said target remote access network node (330; 430; 630) operational configuration information; and
transmission logic operable to transmit said stored target remote access network node operational configuration information to a requesting small cell access network node (300; 400a, 400b; 600a, 600b) in a wireless communication network operating according to a second radio access technology protocol.

## Patentansprüche

1. Verfahren zur Übermittlung von Betriebskonfigurationsinformationen zwischen einem entfernten Ziel-Zugangsnetzwerkknoten (330; 430; 630) in einem drahtlosen Kommunikationsnetzwerk, welches gemäß einem ersten Funkzugangstechnologie-Protokoll arbeitet, und einem Kleinzellen-Zugangsknoten (300; 400a, 400b; 600a; 600b) in einem drahtlosen Kommunikationsnetzwerk, welches gemäß einem zweiten Funkzugangstechnologie-Protokoll arbeitet, wobei das besagte Verfahren umfasst:
Empfangen, an einem Kleinzellen-Gateway, einer Anforderung von einem anfordernden Kleinzellen-Zugangsknoten (300; 400a, 400b; 600a; 600b) in einem drahtlosen Kommunikationsnetzwerk, welches gemäß einem zweiten Funkzugangstechnologie-Protokoll arbeitet, für Betriebskonfigurationsinformationen von dem besagten entfernten Ziel-Zugangsnetzwerkknoten; und nach Empfang der besagten Anforderung von dem besagten anfordernden Kleinzellen-Zugangsknoten (300; 400a, 400b; 600a; 600b), Ermitteln, an dem besagten Kleinzellen-Gateway, ob die besagten Betriebskonfigurationsinformationen von dem besagten entfernten Ziel-Zugangsnetzwerkknoten (330; 430; 630) bereits gespeichert sind, und, wenn dies der Fall ist, Übertragen der besagten gespeicherten Informationen; und, wenn diese noch nicht gespeichert sind,
Einholen, an dem besagten Kleinzellen-Gateway (310; 410; 610), der Betriebskonfigurationsinformationen von dem besagten entfernten Ziel-Zugangsnetzwerkknoten (330; 430; 630) in dem besagten drahtlosen Kommunikationsnetzwerk, welches gemäß dem besagten ersten Funkzugangstechnologie-Protokoll arbeitet;
Speichern, an dem besagten Kleinzellen-Gateway (310; 410; 610), der den besagten entfernten Ziel-Zugangsnetzwerkknoten (330; 430; 630) betreffenden Betriebskonfigurationsinformationen, und
Übertragen, durch das besagte Kleinzellen-Gateway (310; 410; 610), der besagten gespeicherten, den besagten entfernten Ziel-Zugangsnetzwerkknoten (330; 430; 630) betreffenden Betriebskonfigurationsinformationen an einen anfordernden Kleinzellen-Zugangsnetzwerkknoten (300; 400a; 400b; 600a; 600b) in einem drahtlosen Kommunikationsnetzwerk, welches gemäß einem zweiten Funkzugangstechnologie-Protokoll arbeitet.

2. Verfahren nach Anspruch 1, weiterhin umfassend:
Einholen der aktualisierten Betriebskonfigurationsinformationen von dem besagten entfernten Ziel-Zugangsnetzwerkknoten (330; 430; 630) in dem besagten drahtlosen Kommunikationsnetzwerk, welches gemäß dem besagten ersten Funkzugangstechnologie-Protokoll arbeitet; und
Speichern der den besagten entfernten Ziel-Zugangsnetzwerkknoten (330; 430; 630) betreffenden aktualisierten Betriebskonfigurationsinformationen.

3. Verfahren nach Anspruch 2, umfassend: Initiieren der Übertragung der den besagten entfernten Ziel-Zugangsnetzwerkknoten betreffenden gespeicherten aktualisierten Betriebskonfigurationsinformationen an einen oder mehrere anfordernde Kleinzellen-Zugangsnetzwerkknoten (300; 400a; 400b; 600a, 600b) in einem drahtlosen Kommunikationsnetzwerk, welches gemäß einem zweiten Funkzugangstechnologie-Protokoll arbeitet.

4. Verfahren nach einem beliebigen der vorstehenden Ansprüche, wobei das besagte Einholen das Übertragen einer Anforderung für die besagten Betriebskonfigurationsinformationen an den besagten entfernten Ziel-Zugangsnetzwerkknoten (330; 430; 630) und das Abwarten des Empfangs einer Antwort umfasst.

5. Verfahren nach einem beliebigen der vorstehenden Ansprüche, weiterhin umfassend:
Beenden einer Anforderung von dem besagten anfordernden Kleinzellen-Zugangsnetzwerkknoten für Betriebskonfigurationsinformationen von dem besagten entfernten Ziel-Zugangsnetzwerkknoten (330; 430; 630) in einem drahtlosen Kommunikationsnetzwerk, welches gemäß einem ersten Funkzugangstechnologie-Protokoll arbeitet;
Beachten, dass der besagte anfordernde Kleinzellen-Zugangsnetzwerkknoten (300; 400a; 400b; 600a, 600b) Betriebsinformationen von dem besagten entfernten Ziel-Zugangsnetzwerkknoten angefordert hat; und
Erstellen einer neuen Anforderung für Betriebskonfigurationsinformationen von dem besagten entfernten Ziel-Zugangsnetzwerkknoten (330; 430; 630).

6. Verfahren nach einem beliebigen der vorstehenden Ansprüche, umfassend das Codieren der das Ziel-Zugangsnetzwerk betreffenden gespeicherten Informationen, so dass diese als von dem besagten entfernten Ziel-Zugangsnetzwerkknoten stammend erscheinen, vor deren Übertragung an den besagten anfordernden Kleinzellen-Zugangsnetzwerkknoten (300; 400a; 400b; 600a, 600b).

7. Verfahren nach einem beliebigen der vorstehenden Ansprüche, wobei die besagte Anforderung von dem besagten anfordernden Kleinzellen-Zugangsnetzwerkknoten eine Angabe darüber enthält, ob die Betriebsinformationen von dem besagten entfernten Ziel-Zugangsnetzwerkknoten (330; 430; 630) einmal oder jedes Mal, wenn relevante interessierende Betriebskonfigurationsparameter geändert werden, angefordert werden.

8. Verfahren nach einem beliebigen der vorstehenden Ansprüche, wobei die besagte Anforderung von dem besagten anfordernden Kleinzellen-Zugangsnetzwerkknoten (300; 400a; 400b; 600a, 600b) eine RIM-Informationsanforderung enthält.

9. Verfahren nach einem beliebigen der vorstehenden Ansprüche, wobei das erste und das zweite Funkzugangstechnologie-Protokoll 3GPP-Funkzugangstechnologie-Protokolle umfassen.

10. Computerprogramm-Produkt, betreibbar, um bei der Ausführung auf einem Computer das Verfahren gemäß einem beliebigen der Ansprüche 1 bis 9 durchzuführen.

11. Kleinzellen-Gateway (310; 410; 610), betreibbar, um Betriebskonfigurationsinformationen zwischen einem entfernten Ziel-Zugangsnetzwerkknoten (330; 430; 630) in einem drahtlosen Kommunikationsnetzwerk, welches gemäß einem ersten Funkzugangstechnologie-Protokoll arbeitet, und einem Kleinzellen-Zugangsknoten (300; 400a, 400b; 600a; 600b) in einem drahtlosen Kommunikationsnetzwerk, welches gemäß einem zweiten Funkzugangstechnologie-Protokoll arbeitet, zu übermitteln, wobei das besagte Kleinzellen-Gateway (310; 410; 610) umfasst:
Empfangslogik, betreibbar für den Empfang einer Anforderung von dem anfordernden Kleinzellen-Zugangsknoten in einem drahtlosen Kommunikationsnetzwerk, welches gemäß einem zweiten Funkzugangstechnologie-Protokoll arbeitet, für Betriebskonfigurationsinformationen von einem entfernten Ziel-Zugangsnetzwerkknoten; Betriebskonfigurations-Speicherlogik, betreibbar, um zu ermitteln, ob die Betriebskonfigurationsinformationen von dem entfernten Ziel-Zugangsnetzwerkknoten bereits gespeichert sind, und, wenn dies der Fall ist, Anweisen der Übertragungslogik, die gespeicherten Informationen bei Empfang der Anforderung von dem Kleinzellen-Zugangsnetzwerk zu übertragen; und wobei, wenn diese noch nicht gespeichert sind,
die Betriebskonfigurations-Speicherlogik betreibbar ist, um Betriebskonfigurationsinformationen von einem entfernten Ziel-Zugangsnetzwerkknoten (330; 430; 630) in dem besagten drahtlosen Kommunikationsnetzwerk, welches gemäß dem besagten ersten Funkzugangstechnologie-Protokoll arbeitet, einzuholen; und wobei die besagte
Betriebskonfigurations-Speicherlogik weiterhin betreibbar ist, um die den besagten entfernten Ziel-Zugangsnetzwerkknoten (330; 430; 630) betreffenden Betriebskonfigurationsinformationen zu speichern; und
Übertragungslogik, betreibbar für das Übertragen der gespeicherten, den besagten entfernten Ziel-Zugangsnetzwerkknoten betreffenden Betriebskonfigurationsinformationen an einen anfordernden Kleinzellen-Zugangsnetzwerkknoten (300; 400a; 400b; 600a; 600b) in einem drahtlosen Kommunikationsnetzwerk, welches gemäß einem zweiten Funkzugangstechnologie-Protokoll arbeitet..

## Revendications

1. Procédé de communication d'informations de configuration opérationnelle entre un noeud de réseau d'accès à distance cible (330 ; 430 ; 630) dans un réseau de communication sans fil fonctionnant conformément à un premier protocole de technologie d'accès radio et un noeud d'accès à une petite cellule (300 ; 400a, 400b ; 600a, 600b) dans un réseau de communication sans fil fonctionnant conformément à un deuxième protocole de technologie d'accès radio, ledit procédé comprenant les étapes suivantes :
recevoir, au niveau d'une passerelle de petite cellule, une demande d'un noeud de réseau d'accès à une petite cellule demandeuse (300 ; 400a, 400b ; 600a, 600b) dans un réseau de communication sans fil fonctionnant conformément à un deuxième protocole de technologie d'accès radio pour des informations de configuration opérationnelle dudit noeud de réseau d'accès à distance cible ; et, à la réception de ladite demande dudit noeud de réseau d'accès à une petite cellule demandeuse (300 ; 400a, 400b ; 600a, 600b), déterminer, au niveau de ladite passerelle de petite cellule, si lesdites informations de configuration opérationnelle dudit noeud de réseau d'accès à distance cible (330 ; 430 ; 630) sont déjà stockées, et, si tel est le cas, transmettre lesdites informations stockées ; et, si elles ne sont pas déjà stockées
obtenir, au niveau de ladite passerelle de petite cellule (310 ; 410, 610) des informations de configuration opérationnelle dudit noeud de réseau d'accès à distance cible (330 ; 430 ; 630) dans ledit réseau de communication sans fil fonctionnant conformément audit premier protocole de technologie d'accès radio ;
stocker, au niveau de ladite passerelle de petite cellule (310 ; 410 ; 610), lesdites informations de configuration opérationnelle du noeud de réseau d'accès à distance cible (330 ; 430 ; 630) ; et
transmettre, par ladite passerelle de petite cellule, lesdites informations de configuration opérationnelle stockées du noeud de réseau d'accès à distance cible à un noeud de réseau d'accès à une petite cellule demandeuse (300 ; 400a, 400b ; 600a, 600b) dans un réseau de communication sans fil fonctionnant conformément à un deuxième protocole de technologie d'accès radio.

2. Procédé selon la revendication 1, comprenant en outre les étapes suivantes :
obtenir des informations de configuration opérationnelle mises à jour dudit noeud de réseau d'accès à distance cible (330 ; 430 ; 630) dans ledit réseau de communication sans fil fonctionnant conformément audit premier protocole de technologie d'accès radio ; et
stocker lesdites informations de configuration opérationnelle mises à jour du noeud de réseau d'accès à distance cible (330 ; 430 ; 630).

3. Procédé selon la revendication 2, comprenant l'étape suivante : initier la transmission desdites informations de configuration opérationnelle stockées du noeud de réseau d'accès cible à un ou plusieurs noeuds de réseau d'accès à une petite cellule demandeuse (300 ; 400a, 400b ; 600a, 600b) dans un réseau de communication sans fil fonctionnant conformément à un deuxième protocole de technologie d'accès radio.

4. Procédé selon l'une quelconque des revendications précédentes, dans lequel ladite obtention comprend la transmission d'une demande desdites informations de configuration opérationnelle audit noeud de réseau d'accès à distance cible (330 ; 430 ; 630) et l'attente de la réception d'une réponse.

5. Procédé selon l'une quelconque des revendications précédentes, comprenant en outre la fin d'une demande dudit réseau d'accès à une petite cellule demandeuse d'informations de configuration opérationnelle dudit noeud de réseau d'accès à distance cible (330 ; 430 ; 630) dans un réseau de communication sans fil fonctionnant conformément à un premier protocole de technologie d'accès radio ;
noter que ledit noeud d'accès à une petite cellule demandeuse (300 ; 400a, 400b ; 600a, 600b) a demandé des informations opérationnelles dudit noeud de réseau d'accès à distance cible ; et créer une nouvelle demande d'informations de configuration opérationnelle dudit noeud d'accès à distance cible (330 ; 430 ; 630).

6. Procédé selon l'une quelconque des revendications précédentes, comprenant le codage desdites informations de réseau d'accès cible stockées pour qu'elles semblent provenir dudit noeud de réseau d'accès à distance cible avant la transmission audit noeud d'accès à une petite cellule demandeuse (300 ; 400a, 400b ; 600a, 600b).

7. Procédé selon l'une quelconque des revendications précédentes, dans lequel ladite demande dudit noeud de réseau d'accès à une petite cellule demandeuse comprend une indication selon laquelle une configuration opérationnelle dudit noeud de réseau d'accès à distance cible (330 ; 430 ; 630) est nécessaire une fois, ou chaque fois que des paramètres de configuration opérationnelle appropriés d'intérêt sont modifiés.

8. Procédé selon l'une quelconque des revendications précédentes, dans lequel ladite demande dudit noeud de réseau d'accès à une petite cellule demandeuse (300 ; 400a, 400b ; 600a, 600b) comprend une demande d'informations RIM.

9. Procédé selon l'une quelconque des revendications précédentes, dans lequel le premier et le deuxième protocoles de technologie d'accès radio comprennent des protocoles de technologie d'accès radio 3GPP.

10. Produit de programme informatique permettant, lorsqu'il est exécuté sur un ordinateur, d'exécuter le procédé selon l'une quelconque des revendications 1 à 9.

11. Passerelle de petite cellule (310; 410; 610) permettant de communiquer des informations de configuration opérationnelle entre un noeud de réseau d'accès à distance cible (330 ; 430 ; 630) dans un réseau de communication sans fil fonctionnant conformément à un premier protocole de technologie d'accès radio et un noeud d'accès à une petite cellule (300 ; 400a, 400b ; 600a, 600b) dans un réseau de communication sans fil fonctionnant conformément à un deuxième protocole de technologie d'accès radio, ladite passerelle de petite cellule (310 ; 410 ; 610) comprenant :
une logique de réception permettant de recevoir une demande du noeud de réseau d'accès à une petite cellule demandeuse dans un réseau de communication sans fil fonctionnant conformément à un deuxième protocole de technologie d'accès radio d'informations de configuration opérationnelle d'un noeud de réseau d'accès à distance cible ; une logique de stockage de configuration opérationnelle permettant de déterminer si les informations de configuration opérationnelle du noeud de réseau d'accès à distance cible sont déjà stockées, et, si tel est le cas, d'informer la logique de transmission de transmettre les informations stockées à la réception de la demande du réseau d'accès à une petite cellule, et, si elles ne sont pas déjà stockées, ladite
logique de détermination de configuration opérationnelle permet d'obtenir des informations de configuration opérationnelle d'un noeud de réseau d'accès à distance cible (330 ; 430 ; 630) dans ledit réseau de communication sans fil fonctionnant conformément audit premier protocole de technologie d'accès radio ; et ladite logique de stockage de configuration opérationnelle permet en outre de stocker lesdites informations de configuration opérationnelle du noeud de réseau d'accès à distance cible (330 ; 430 ; 630) ; et
une logique de transmission permettant de transmettre lesdites informations de configuration opérationnelle stockées du noeud de réseau d'accès à distance cible à un noeud de réseau d'accès à une petite cellule demandeuse (300 ; 400a, 400b ; 600a, 600b) dans un réseau de communication sans fil fonctionnant conformément à un deuxième protocole de technologie d'accès radio.
